# DEMANDE DE BREVET EUROPEEN

(11) **EP 1 347 123 A1**
(43) Date de publication de la demande: **24.09.2003**
(21) Numéro de dépôt: 03100644.8
(22) Date de dépôt: 13.03.2003
(51) Int. Cl.: E04H 4/00, B32B 27/12

(54) **Membrane d'étanchéité pour revêtement de piscine à base de PVC souple**

(30) Priorité: 22.03.2002 FR 0203651
(71) Demandeur: SOLVAY (Société Anonyme), 1050 Bruxelles (BE)
(72) Inventeur: TANGHE, Hans, 08470 Sant Celoni (ES)
(74) Mandataire: Jacques, Philippe

(57) **Abrégé**

Membrane d'étanchéité pour piscine à base de PVC souple comprenant une armature en verre; procédé de fabrication et utilisation d'une telle membrane.

## Description

La présente invention concerne une membrane d'étanchéité pour piscine à base de PVC souple, ainsi qu'un procédé de fabrication d'une telle membrane et son utilisation en tant que revêtement pour piscine.

L'utilisation du PVC souple en tant que matériau de revêtement pour piscine est connue depuis longtemps.

Ainsi, le brevet US 5,191,007 décrit l'utilisation d'une formule de PVC souple particulière à cette fin, ayant comme caractéristique de réduire la dégradation chimique du revêtement juste au dessus de la surface de l'eau.

L'utilisation d'une membrane en PVC souple homogène (non renforcée) est une solution économique mais qui présente des inconvénients:
- la membrane doit être réalisée à l'avance, sous forme de poche, et puis être transportée jusqu'à la piscine pour y être installée en une seule pièce, ce qui peut poser problème dans certains cas (compte tenu de la taille et de la géométrie de la piscine, de son environnement...)
- sa stabilité dimensionnelle est faible et suite à l'absorption d'eau, on assiste au gonflement de la membrane et à la formation de plis dans le revêtement.

Pour remédier à ces défauts, on a songé à munir les membranes en PVC d'une armature en polyester. En effet, la présence d'un tel renfort permet de réaliser les soudures (et donc, d'assembler le revêtement) in situ. En outre, elle confère à la structure une stabilité dimensionnelle améliorée. Enfin, alors qu'un revêtement en PVC souple ne supporte en lui-même aucune charge (il épouse simplement la paroi suite à l'allongement provoqué par le poids de l'eau), un revêtement en PVC armé peut par lui-même supporter au moins en partie (dans certaines zones) la charge (poids de l'eau) et présenter des propriétés d'allongement sous tension satisfaisantes dans ces endroits (par exemple dans les coins, où le revêtement est à dessein sous dimensionné afin d'obtenir un joint de dilatation intégré). Le polyester constitue de ce fait un matériau de choix pour le renfort, compte tenu de ses propriétés d'allongement sous tension. Toutefois, l'utilisation d'une armature en polyester comporte les inconvénients suivants:
- elle est coûteuse
- elle complique les procédés de recyclage utilisés à ce jour; en effet, les fibres de polyester sont souples et résistantes et donc, à moins d'être broyées cryogéniquement, elles provoquent des problèmes lors des procédés de recyclage mécanique (enchevêtrements et bouchages à certains endroits des installations).

L'invention a dès lors pour but de fournir un matériau de revêtement pour piscine qui est économique, facilement recyclable et qui résiste à la formation de plis.

A cet effet, l'invention concerne une membrane d'étanchéité pour piscine à base de PVC souple comprenant une armature en verre.

Elle est basée sur la constatation surprenante que bien que les armatures en verre soient réputées pour leurs mauvaises propriétés d'allongement sous tension, des membranes en PVC souple pourvues d'une armature en verre peuvent bénéficier d'un allongement à la rupture supérieur ou égal à 20%, voire à 100% et dans certains cas même, à 200%.

Par "membrane d'étanchéité pour revêtement de piscine" selon la présente invention, on entend désigner une membrane ayant toutes les caractéristiques (à la fois techniques et esthétiques) requises pour assurer sa fonction (de revêtement étanche pour piscine), et ce éventuellement moyennant une couche de peinture, laque...d'un côté et/ou d'une couche d'adhésif (ou autre aide à l'encrage) de l'autre côté. Selon la présente invention, le mot « piscine» désigne en fait tout point d'eau (généralement artificiel) dont on préserve le contenu au moyen d'un revêtement étanche; il peut par exemple s'agir d'un bassin de natation (selon la définition classique du terme), d'un étang ou d'un bassin de jardin...

Par PVC souple selon la présente invention, on entend désigner un mélange à base d'au moins une résine de chlorure de vinyle (de préférence un homopolymère, mais éventuellement également un copolymère avec des monomères tels que l'acétate de vinyle à raison de 50% maximum) et d'au moins un plastifiant. La résine de chlorure de vinyle selon la présente invention peut être obtenue par polymérisation en suspension ou en émulsion. Il s'agit de préférence d'une résine suspension. Cette résine présente avantageusement un Kw (ou nombre K, caractéristique de la viscosité de la résine) supérieur ou égal à 60, voire à 70, mais de préférence inférieur ou égal à 80, voire à 75. Le plastifiant peut être choisi parmi les phtalates, adipates, sébaçates et trimellitates. Il s'agit de préférence de phtalates tels que le DIDP (di-isodecyl-phtalate), DEHP ou DOP (di-2-ethyl-hexyl-phtalate = di-octyl-phtalate) ou d'un mélange de diesters d'acide phtalique et d'alcools linéaires en C6-C11. De préférence, le PVC souple comprend un homopolymère de chlorure de vinyle ayant un nombre K (Kw) compris entre 60 et 80 et un phtalate comme plastifiant. Il comprend généralement également des additifs tels que des stabilisants (par exemple à base de Pb, Sn, Ca/Zn ou Ba/Zn...), antioxydants (huile de soja époxydée (HSE), bisphénol A, dérivés phénoliques, phosphites...), pigments (par exemple du TiO2), charges (par exemple du CaCO₃)...

La membrane selon la présente invention contient avantageusement une fraction de déchets tels que des déchets de production de membranes similaires ou d'autres objets en PVC, des broyats de membranes usagées ou d'autres objets en PVC usagés etc... De manière particulièrement préférée, elle comprend des déchets de production de membranes similaires et/ou des broyats de membranes similaires usagées. En effet, contrairement aux armatures en polyester, les armatures en verre cassent facilement lors du recyclage, donnant ainsi une charge inerte utilisable pour la production de nouvelles membranes (il suffit d'adapter la composition pour tenir compte de ce taux de charge). Le taux de recyclage est toutefois généralement limité, notamment pour éviter la présence de pollutions. De manière avantageuse, et lorsque cela est possible compte tenu du procédé de mise en oeuvre choisi, l'utilisation de résine recyclée se fera principalement, voire exclusivement via la résine constituant la face cachée du revêtement (en contact avec les parois de la piscine).

Par armature en verre selon la présente invention, on entend désigner un renfort plan constitué de fibres de verre.

Selon une première variante préférée de la présente invention, il s'agit d'une grille de verre constituée de fibres de verre "tissées", c.à.d. disposées selon deux directions perpendiculaires, sans forcément être entrelacées, de préférence de manière à ce que la distance entre fils parallèles soit supérieure ou égale au mm. Cette distance est toutefois avantageusement inférieure ou égale au cm. Cette grille est de préférence constituée de fibres dont le poids par 10000 m est supérieur ou égal à 280 g (soit des fibres de 280 DTEX ou plus), voire supérieur ou égal à 340 g (340 DTEX ou plus). Généralement, il s'agit de fibres de 2200 DTEX ou moins, de préférence de 1100 DTEX ou moins, voire de 550 DTEX ou moins. La densité de ces grilles en verre (et donc, leur épaisseur et leur maillage) est adaptée à la résistance mécanique et thermique désirée. Par maillage, on entend désigner le nombre de fils par cm dans chacune des directions perpendiculaires. Généralement, le maillage utilisé est supérieur ou égal à 1 x 1, de préférence supérieur ou égal à 2 x 2. Ce maillage est toutefois avantageusement inférieur ou égal à 10 x 10, voire à 8 x 8 . A noter à ce propos qu'à densité égale (c.à.d. à nombre de DTEX et à maillage identique), une armature en verre donne de meilleurs résultats qu'une armature en polyester.

Selon une seconde variante préférée de la présente invention, on utilise comme armature, un voile de verre, c.à.d. des fibres de verre enchevêtrées, éventuellement agglomérées à l'aide d'un liant ou munies d'excroissances favorisant leur accrochage. De préférence, le voile selon cette variante de la présente invention possède une densité supérieure ou égale à 10 g/m², voire à 50 g/m². Sa densité est toutefois généralement inférieure ou égale à 200 g/m², voire à 100 g/m². La densité de ce voile est également adaptée à la résistance mécanique et thermique désirée.

Le verre utilisé dans la présente invention peut être de tout type. Il s'agit de préférence d'un verre de type "E", c.à.d. un grade courant, peu cher. Toutefois, des grades spéciaux (A, B...) peuvent être utilisés en fonction de la résistance mécanique et/ou chimique souhaitée.

De préférence, la membrane selon la présente invention est constituée de deux couches de PVC souple situées au moins en partie (compte tenu d'une éventuelle interpénétration) de part et d'autre de l'armature en verre. De cette manière, l'armature en verre est protégée et elle assure au mieux son rôle de renfort interne. En général, les deux couches externes de PVC souple ont une composition identique ou similaire (ce dernier cas couvrant par exemple la variante déjà évoquée selon laquelle seule une couche (la face cachée) contient des déchets de production ou des broyats de membranes usagées).

La membrane selon la présente invention peut être fabriquée par calandrage - laminage (c.à.d. que les deux couches de PVC sont d'abord formées par calandrage et qu'ensuite, on vient les mettre de part et d'autre de l'armature par laminage à chaud), extrusion - laminage (procédé similaire, mais où le calandrage est remplacé par une extrusion), revêtement (ou enduction d'une solution de PVC souple sur l'armature suivie de l'évaporation du solvant) ... De préférence, le procédé de fabrication des membranes selon la présente invention comprend au moins une étape de calandrage et au moins une étape de laminage.

L'épaisseur de la membrane selon la présente invention est généralement supérieure ou égale à 0,5 mm, voire à 1 mm. Elle est généralement inférieure ou égale à 2 mm, voire à 1,5 mm. L'armature de verre possède généralement une épaisseur supérieure ou égale à 0,02 mm, voire à 0,05 mm. Cette épaisseur est toutefois généralement inférieure ou égale à 0,3 mm, voire à 0,1 mm. Dans le cas où cette armature comprend une couche de PVC souple de chaque côté, ces couches ont généralement une épaisseur supérieure ou égale à 0,2 mm, voire à 0,4 mm, mais inférieure ou égale à 1,1 mm, voire à 0,7 mm. De préférence, ces deux couches ont la même épaisseur.

La membrane selon la présente invention est généralement commercialisée sous forme de rouleaux ayant une longueur et une largeur variable. La longueur varie généralement de 10 à 40 m, et la largeur de 100 à 300 cm. Les dimensions les plus courantes sont une longueur de 25 m pour une largeur de 165 ou 205 cm.

La membrane selon la présente invention est avantageusement utilisée comme revêtement pour piscine. Afin de permettre le gonflement provoqué par l'absorption progressive d'eau sans provoquer la formation de plis, on prévoit généralement lors de la pose dudit revêtement, un arrondi au bas des murs de la piscine pour qu'il se forme un vide entre la membrane et la paroi de la piscine, qui sert de zone de dilatation. On veillera généralement à maintenir le rayon de cet arrondi inférieur à 15 cm, et de préférence à 10 cm, voire à 5 cm, pour des raisons esthétiques principalement. En pratique, on part généralement de bandes issues de rouleaux de membrane de forme et de dimensions appropriées (selon la forme et la dimension de la piscine, le matériel de soudure disponible, etc...) que l'on assemble par soudage de manière à obtenir un revêtement étanche. Pour ce faire, ces bandes sont généralement d'abord disposées de manière à obtenir un recouvrement sur leurs bords (généralement d'au moins 2 cm, voire au moins 5 cm, mais généralement de pas plus de 10 cm), et ces bords sont ensuite soudés. Le soudage peut se faire par toute technique appropriée. Le soudage à air chaud convient particulièrement bien.

La présente invention est illustrée de manière non limitative par les exemples suivants:

Des membranes ont été réalisées à partir de feuilles à base de PVC de Kw 71, de DIDP (65 pcr ou 65 parts en poids par rapport à 100 parts de résine), de HSE (2 pcr), d'un stabilisant Ba/Zn (3 pcr de stabilisant IRGASTAB® BZ561) et de pigments (7 pcr de TiO2 et 0.5 pcr de bleu phtalocyanine de Cu) et ayant une épaisseur de 0,75 mm. Ces feuilles ont été placées de part et d'autre des armatures décrites ci-dessous, et l'ensemble a ensuite été laminé entre un cylindre métallique chauffé à 170°C et un cylindre presseur recouvert de caoutchouc.

Ces membranes ont ensuite été testées en piscine, dans des conditions identiques, où l'on a mesuré la température à partir de laquelle des plis apparaissent. Le résultat de ces tests figure dans le tableau ci-dessous

| Nature armature | Maillage - densité | Temp. app. plis (°C) |
|---|---|---|
| - (pas d'armature) | - | 27 |
| polyester | 3 x 3 - 1100 DTEX | 32 |
| verre | 2 x 2 - 340 DTEX | 32 |
| verre | 3 x 3 - 1100 DTEX | 40 |
| verre (voile) | 50 g/m2 | 40 |

On constate que:
- à performances égales, une grille de verre moins dense qu'une grille en polyester peut être utilisée et que cette solution est de 10 à 20% moins chère
- les membranes selon la présente invention conviennent pour de nouvelles applications, à plus haute température telles que des bains en kinési- et physiothérapie.

## Revendications

1. Revêtement pour piscine essentiellement constitué d'une membrane d'étanchéité à base de PVC souple comprenant une armature en verre.

2. Revêtement selon la revendication 1, **caractérisé en ce que** la membrane d'étanchéité présente un allongement à la rupture supérieur à 20%.

3. Revêtement selon la revendication 1 ou 2, **caractérisé en ce que** le PVC souple comprend un homopolymère de chlorure de vinyle ayant un nombre K (K_{w}) compris entre 60 et 80 et un phtalate comme plastifiant.

4. Revêtement selon l'une quelconque des revendications précédentes, **caractérisé en ce que** la membrane d'étanchéité comprend des déchets de production de membranes similaires et/ou des broyats de membranes similaires usagées.

5. Revêtement selon l'une quelconque des revendications précédentes, **caractérisé en ce que** l'armature en verre est une grille ou un voile.

6. Revêtement selon l'une quelconque des revendications précédentes, **caractérisé en ce que** l'armature est une grille comprenant des fibres de verre de 280 à 2200 DTEX, tissées avec un maillage de 1 x 1 à 10 x 10.

7. Revêtement selon l'une quelconque des revendications 1 à 5, **caractérisé en ce que** l'armature est un voile de verre ayant une densité de 10 à 200 g/m².

8. Revêtement selon l'une quelconque des revendications précédentes, **caractérisée en ce que** la membrane d'étanchéité comprend deux couches de PVC souple situées au moins en partie de part et d'autre de l'armature.

9. Revêtement selon la revendication précédente, **caractérisé en ce que** une seule des deux couches de PVC souple contient des déchets de production de membranes similaires et/ou des broyats de membranes similaires usagées.

10. Revêtement selon l'une quelconque des revendications précédentes, **caractérisé en ce que** la membrane d'étanchéité a été fabriquée par un procédé comprenant au moins une étape de calandrage et au moins une étape de laminage.

11. Utilisation d'un revêtement selon l'une quelconque des revendications précédentes en tant que revêtement pour piscine.
